# EUROPEAN PATENT SPECIFICATION

(11) **EP 0 539 743 B1**
(45) Date of publication and mention of the grant of the patent: **06.08.1997**
(21) Application number: 92116646.8
(22) Date of filing: 29.09.1992
(51) Int. Cl.: G01N 27/447

(54) **Enhanced fluorescence detection of samples in capillary column**
Verbesserte Fluoreszenz-Erfassung von Proben in einem Kapillarrohr
Détection améliorée de la fluorescence d'échantillons dans une colonne capillaire

(30) Priority: 08.10.1991 US 772823; 30.09.1991 US 769422
(43) Date of publication of application: 05.05.1993
(73) Proprietor: BECKMAN INSTRUMENTS, INC., Fullerton California 92634-3100 (US)
(72) Inventor: Pentoney, Stephen L., Jr., Yorba Linda, California 92686 (US); Kaye, Wilbur, Princeville, HI 96722 (US)
(74) Representative: Fiener, Josef

(56) References cited:
- EP-A- 0 404 646
- FR-A- 2 558 262
- US-A- 3 985 441
- US-A- 4 088 407
- US-A- 4 838 688
- US-A- 4 854 700

## Description

### BACKGROUND OF THE INVENTION

### 1. Field of the Invention

The present invention relates to fluorescence detection and more particularly to the collection of fluorescent emission from a capillary separation channel.

### 2. Description of Related Art

Fluorescence detection is inherently very sensitive and macromolecules (e.g. proteins and DNA fragments) of a biological sample which have been labeled with fluorescent materials can be detected by analyzing the fluorescent emissions. Fluorescence detection has been practiced in the field of capillary electrophoresis. Reference is made to U.S. Patent No. 4,675,300 to Zare et al for a detailed description of the detection technique. In general, Zare makes use of a coherent light source (e.g. laser) to interrogate a small portion of a capillary separation channel thereby defining a small detection volume. The samples being separated by electrophoresis have been tagged with fluorescent materials such as fluorescein prior to, during or just after electrophoresis. Upon electrophoresis, as the samples cross the path of the light beam, the fluorescent materials are caused to fluoresce thereby indicating the presence of a sample. By tagging the samples with appropriate fluorescent materials, one can detect the intensity of fluorescent emission from the separated samples and determine from the relative intensities the amount of a particular sample present in the sample mixture and its identity.

To date, laser-induced fluorescence is by far the most sensitive means of detecting many types of sample components separated by capillary electrophoresis. Because of the small detection volume, it is desirable to collect as much of the fluorescent emissions as possible to achieve maximum sensitivity. In the past, carefully corrected optics such as a large numerical aperture microscope objective or one or more optical fibers have been used to collect a relatively small solid angle of the fluorescent emission. In this case not only must the laser beam be in proper alignment with the capillary separation channel, but the capillary separation channel itself must be brought into proper alignment with the microscope objective. This necessitates the use of a translatable optical alignment component such as a capillary positioner or a microscope objective positioner. Since careful alignment of both the capillary separation channel with the laser beam and the collection optic (microscope objective or optical fibers) are essential in order to realize maximum sensitivity, typically at least two of the optical components have been mounted on translatable platforms in order that the system may be brought into optimum alignment.

The design of the collection optic system must also take into consideration the undesirable scattered radiation at the source frequency which is typically much more intense than the fluorescent emission. It is known that there is a bright plane of scattered radiation at the source frequency which is distributed over a 360° angle about and perpendicular to the capillary column. Because it is necessary to minimize the amount of scattered radiation reaching the photodetector, in the past some optical systems have been configured to collect emissions which are out of this plane of scatter.

An apparatus according to the preamble of claim 1 is described in US-A-4 838 688.

### SUMMARY OF THE INVENTION

It is the object of the present invention to provide a simple and inexpensive means of collecting a greater amount of fluorescent emission from a minute sample in a capillary column.

The invention resides in an apparatus of the kind referred to in claim 1.

Particular embodiments of the invention are set out in the dependent claims.

An axially symmetrical paraboloid reflector is implemented to collect fluorescent emission from the capillary column. The reflector also serves as a simple bracket for positioning and aligning the capillary column. Fluorescent emission is collimated by the paraboloid reflector which allows more effective use of band pass filters in blocking scattered radiation from detection. Either the scattered radiation or the transmitted excitation beam, or both, can be used to facilitate alignment of the laser beam with respect to the capillary column and paraboloid focal point. The paraboloid reflector also facilitates the implementation of simultaneous multi-channel detection schemes.

### BRIEF DESCRIPTION OF THE DRAWINGS

Fig. 1 is a diametral sectional view of a capillary tube.

Fig. 2 is a schematic of a capillary electrophoresis apparatus with laser induced fluorescence detection.

Fig. 3 is a schematic of a paraboloid reflector used in laser induced fluorescence detection in accordance with one embodiment of the present invention.

Fig. 4 is a sectional view along line 4-4 in Fig. 3 and includes a photodetector and emission filter.

Fig. 5 is a schematic illustrating focusing of the collimated beam to an aperture plate.

Fig. 6 is a schematic illustrating another embodiment of the laser and reflector configuration.

Fig. 7 is a schematic illustrating a multiple-channel detection configuration in accordance with one embodiment of the present invention.

Fig. 8 is a sectional view along line 8-8 in Fig. 7.

Fig. 9 shows the use of a cylindrical mask to switch passage of laser and ultraviolet beams to avoid cross talk.

Fig. 10 is a schematic illustrating the configuration in which the sample is alternately exposed to laser beams of different wavelengths.

Fig. 11 is a schematic illustrating the use of diffraction grating in the collimated beam.

### DESCRIPTION OF THE ILLUSTRATED EMBODIMENTS

The following description is of the best presently contemplated mode of carrying out the invention. This description is made for the purpose of illustrating the general principles of the invention and should not be taken in a limiting sense. The scope of the invention is best determined by reference to the appended claims.

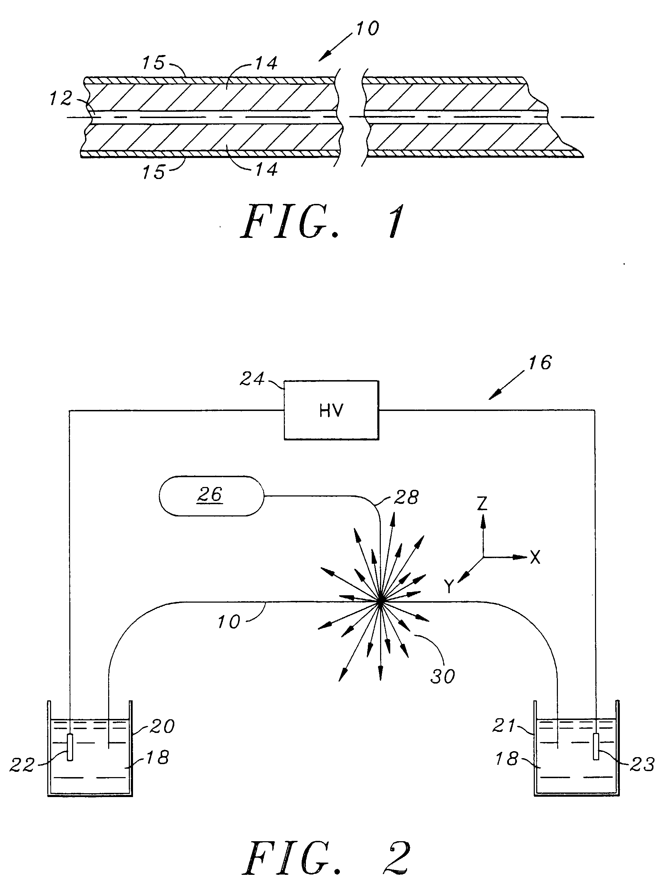

A capillary tube 10 is shown in diametral sectional view in Fig. 1. The tube defines a cylindrical separation channel 12 of capillary dimension on the order of 5-500 µm (micron), typically less than 200 µm (micron). The cylindrical wall 14 of the capillary tube 10 can be made of glass, fused silica, or organic material such as teflon. To strengthen the wall 14, a polyamide coating 15 is bonded to its external surface. The capillary tube 10 is generally flexible, i.e. can be bent into smooth curves.

Fig. 2 illustrates a schematic arrangement of a capillary electrophoresis apparatus 16, and more particularly one in which detection is accomplished by laser induced fluorescence. The two ends of the capillary tube 10 are submerged in electrolyte 18 contained in reservoirs 20 and 21. A high voltage power supply 24 capable of applying a high electric field (typically 1-30 KV) is electrically connected to the electrolyte 18 in the reservoirs 20 and 21 using electrodes 22 and 23. The separation channel is filled with a separation support medium which may be a electrolyte solution, gel electrolyte or other suitable conductive medium. Prior to electrophoresis, a sample to be electrophoretically separated is injected into one end of the separation channel 12. This can be done by any number of conventional techniques. With the two ends of the capillary tube 10 dipped into the electrolyte 18, the high voltage power supply 24 is turned on to cause electrophoresis of the sample which results in separation into its components.

In order to be able to detect fluorescence of the separated components of the sample, it is tagged with a fluorescent material such as fluorescein. For laser induced fluorescence detection, a laser 26 is used as the excitation source. The laser 26 can be, for example, an air cooled argon ion laser, a helium-cadmium laser or a HeNe laser having an output in the range of 1-100 milliwatts. A focusing lens (not shown in Fig. 2) or an optical fiber 28 may be used to direct the laser output to a detection section along the capillary tube 10. At this section, the polyimide protective coating 15 has been removed to allow the laser light to pass through the capillary wall 14 to the separation channel 12. Instead of using a laser source, other radiation sources can be used to excite fluorescence of the fluorescent tags in the sample components.

The laser beam is directed at 90° to the capillary tube 10. When the sample components pass by the laser beam, they are caused to fluoresce in all directions 30. It is desirable to collect and detect as much of the fluorescence as possible to maximize sensitivity and signal-to noise.

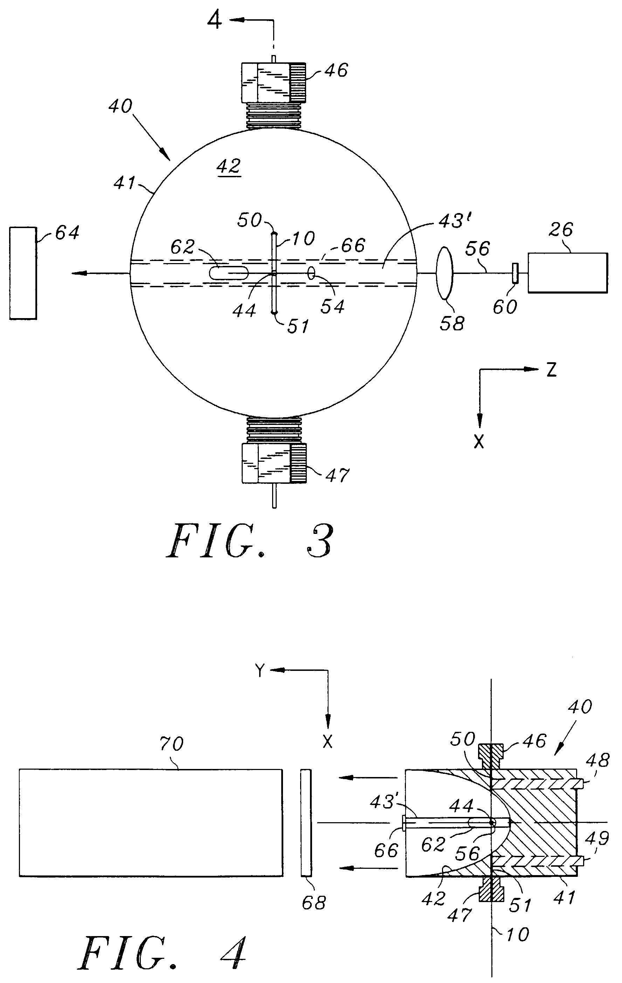

The present invention implements a concave reflector which focuses on the detection section of the capillary tube 10. In the illustrated embodiment, the reflector is an axially symmetrical concave paraboloid reflector. Referring to Figs. 3 and 4, the configuration of the fluorescence collection and detection optics are schematically illustrated. The paraboloid reflector 40 is shown as formed from a cylindrical body 41. This can simply be a polished paraboloid surface 42 of an aluminum block or a metalized paraboloid mirror surface of a plastic block. The block structure allows easy attachment of fittings for securely mounting the capillary tube 10.

The capillary tube 10 is threaded through through-holes 50 and 51 provided in the sides of the reflector body 41. The holes 50 and 51 are positioned such that the capillary tube passes through the focal point 44 of the paraboloid reflector; in particular the detection section of the capillary separation channel is positioned at the focal point 44 of the paraboloid reflector 40. Fittings 46 and 47 are provided to securely mount the capillary in this position. In the alternate or in addition, set screws 48 and 49 may be used through the rear of the reflector to lock the capillary tube 10 in place.

The reflector body 41 is also provided with through-hole 54 through which a laser beam 56 can pass at right angles to the capillary tube 10. The laser beam 56 may be directed at the detection section of the capillary tube 10 by use of a optical fiber 28 (Fig. 2) through the hole 54, or a lens 58 focusing the laser beam 56 through the hole 54 (Fig. 3). Alternatively, the laser beam may be directed from the front of the paraboloid if there is an opening through the vertex of the reflector to allow the transmitted beam to pass (see Fig. 6).

In the embodiment shown in Fig. 3, an excitation filter 60 is used to attenuate any light of unwanted wavelengths originating from the laser 26. In line with the laser entrance hole 54, there is an exit hole 62 provided on the body 41 of the reflector 40. This hole 62 is sized large enough to allow passage of the most intense portion of the transmitted and scattered laser light in the plane perpendicular to the capillary. The exit hole 62 is in the shape of a slot having its larger width in the axial direction of the reflector 40 since the scattered light is in a plane perpendicular to the capillary tube 10. A laser beam dump 64 is provided to trap the light transmitted through the exit hole 62 to prevent the light from interfering with the adjacent detection optics. The beam dump 64 may be nothing more than a piece of paper upon which the transmitted light may be viewed for purpose of lateral alignment of the capillary tube 10 and the incident laser beam. When properly aligned, a symmetric pattern of scattered light is observed upon the beam dump.

In order to mask the scattered light which is reflected from the reflector 40 and/or scattered directly from the capillary tube 10 toward the photomultiplier tube 70, a thin strip 66 of opaque material is mounted over the mouth of the paraboloid reflector 40 and obstructs the plane of scatter. This plane of scatter is normal to the capillary axis. To further reduce the amount of scattered light directed to the photomultiplier tube, the reflector 40 and strip 66 are lined, i.e. glued, with a light absorbing material 43', e.g. flocking paper, about the scatter plane as shown in Fig. 4.

Fluorescent light from the detection section is collimated by the paraboloid reflector 40 and then passes through an emission filter 68 for passing fluorescence of a particular wavelength (further blocking any remaining scattered light) and onto a photomultiplier tube 70. The diameter of the end window of the photomultiplier tube 70 should be approximately equal to the mouth diameter of the reflector 40. The emission filter 68 and excitation filter 60 must not allow a common wavelength to pass to the photomultiplier tube 70 in order to be able to block scattered light at source wavelength.

In order for proper collimation of the fluorescence emission from the capillary detection section, the laser beam should be directed at the focus of the paraboloid. The X-direction alignment of the laser beam with the focus of the paraboloid is determined by looking at the position of the shadow of the blocking strip 66 in the collimated beam.

Generally, the laser beam is properly aligned with the focus of the paraboloid when the shadow of the blocking strip 66 is centrally located in the collimated image.

It is noted that the paraboloid reflector serves a dual purpose. It is both a highly efficient light collector/collimator and a capillary support. The paraboloid reflector 40 provides a much simpler and less expensive means of collecting a greater amount of the fluorescent emission from the sample irradiated by the laser beam 56. The reflector 40 allows collection of a greater solid angle of rays emanating from the sample than with an objective lens system. For example, large numerical aperture microscope objectives used in the past currently cost on the order of one hundred dollars, and collect about 10% of the fluorescent emission. While the paraboloid reflectors described herein are available on the order of five dollars from Carley Lamps, and collect on the order of 40-50% of the fluorescent emission. The collimated fluorescent light allows more effective use of bandpass filters in removing scattered radiation, because bandpass filters require irradiation normal to their surface for proper spectral filtering.

The paraboloid body 41 effectively secures the position of the capillary tube 10 at the focal point. As a result, the number of optical components required for laser induced fluorescence detection in a capillary electrophoresis system have been reduced. Alignment of the capillary with respect to the fluorescence collector is simplified, as a microscope objective is not required.

It is noted that excitation sources other than a laser could be substituted. Detectors other than the photomultiplier may be utilized. In particular a silicon detector could be used in which case there might be merit in substituting an ellipsoid for a paraboloid so that the fluorescence can be collected and focused onto the silicon detector.

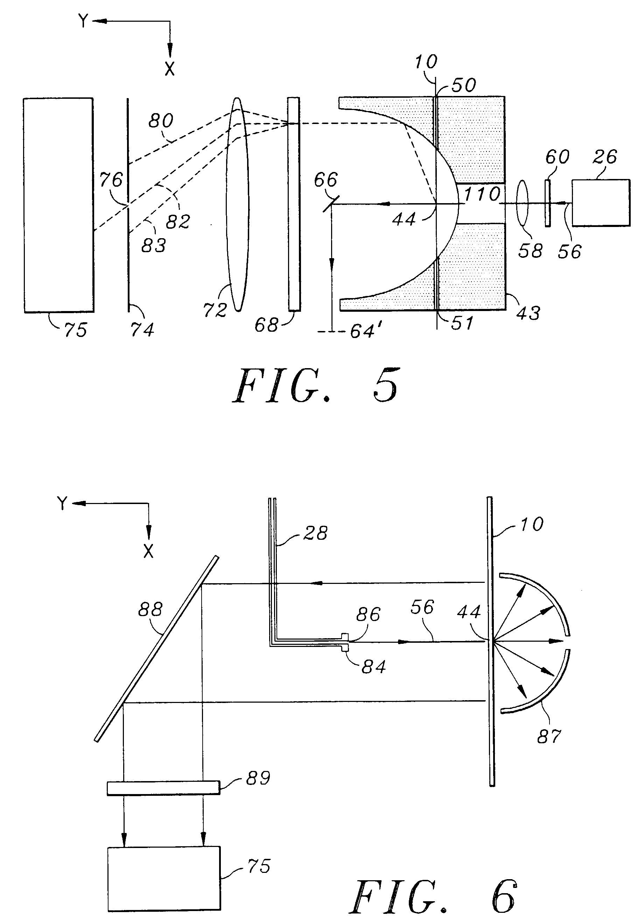

The aforedescribed configuration can be improved by the addition of a lens and aperture facing the reflector. The basic concept is schematically shown in Fig. 5 (some items have been omitted for simplicity). Laser beam 56 from laser 26 is filtered by excitation filter 60 and focused by lens 58 onto the sample in capillary 10 at the focus 44 of the paraboloid 43. A hole 110 in the rear and axial to the paraboloid 43 allows the beam to pass into the paraboloid. Holes 50 and 51 drilled into the paraboloid hold the capillary at the focus of the paraboloid. Upon striking the capillary, a significant fraction of the beam is scattered in a plane perpendicular to the capillary. The primary beam and part of the forward scattered beam is reflected by a mirror 66 positioned along the axis of the paraboloid onto a translucent screen 64'. As the beam is focused by lens 58, a symmetric pattern of scatter will be seen on the screen 64. The remainder of the scattered rays will be trapped by a black bar across the mouth of the paraboloid. This bar (not shown in Fig. 6) also supports the mirror 66 at the axis of the paraboloid.

The fluorescent rays originating from a sample at focus 44 are collimated by the paraboloid and pass to the emission filter 68. One of these rays is identified as 80. Those rays 82 that pass through filter 68 perpendicular to the filter face will be imaged by lens 72 and pass through an aperture 76 on plate 74 to a detector 75. The cone of rays 83 having a wavelength of the exciting laser will fall on the aperture plate 74 and not pass to the detector 75.

If an ellipsoidal reflector is used (not shown), the aperture 76 is located at the second focus of the ellipsoidal reflector. However, there is no region where a collimated beam exists in an ellipsoidal system. Therefore there is greater flexibility in the location of optical components in the paraboloidal system. The lens may abut the paraboloid or be placed at a distance.

There are several advantages resulting from the addition of the lens 72 and aperture 76. The lens and aperture constitute a spatial filter. Stray light originating anywhere other than the focus of the paraboloid reflector 40 will be blocked by the plate 74. In particular, rays that scatter off the paraboloid reflector 40 at any angle other than its specular angle will be blocked. Also the fluorescence source, i.e. the sample, will be imaged on the plate 74. If the source is of extended size the aperture 76 will define the portion of the source from which fluorescence rays may be detected.

Another advantage of the improvement is that the focused beam 82 will have a higher flux density than the collimated beam 80. This means that solid state detectors such as light sensitive diodes will respond with better signal-to-noise than the unfocused case. If one uses magnetic focusing of a photomultiplier, even it will exhibit superior signal-to-noise.

Fig. 6 illustrates an alternate configuration of irradiation of the capillary 10. In this configuration, the laser beam 56 is directed head-on towards the paraboloid reflector 87 along its axis. The tip of optical fiber 28 is positioned against an aperture 86 on a blocking strip 84 and the laser beam is directed at the focus 44 of the paraboloid 41 where the detection section of the capillary tube 10 is positioned. The emitted fluorescence is collimated and reflected by a mirror 88, passed through a filter 89, and directed at the photomultiplier 75. A focusing lens and aperture may be added to this configuration (not shown) to accomplish the advantages of the embodiment of Fig. 5.

The paraboloid reflector 87 further facilitates implementation of several detection channels for simultaneous detection. Some types of samples are best detected by analyzing the absorbance of ultraviolet ("UV") radiation while others are sensitively detected by fluorescence. Moreover, some samples may be tagged with different types of dyes that fluoresce and/or absorb at different wavelengths. For example there is a particular need for multiple wavelength detection when studying DNA.

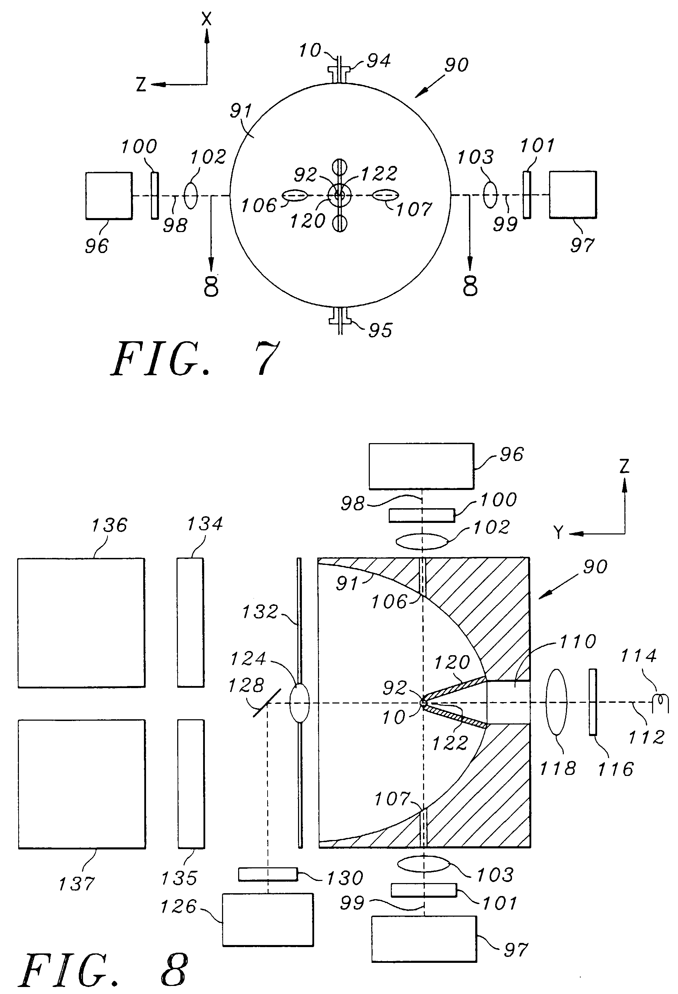

The following is a description of a multiple-channel detection system, in particular one incorporating laser induced fluorescence and UV absorption. Figs. 7 and 8 schematically illustrate the multiple detection configuration in accordance with one embodiment of the present invention. As in the embodiment described with reference to Figs. 3 and 4. the capillary tube 10 is threaded through the body 91 of the paraboloid reflector 90 and passes through the focal point 92 of the paraboloid reflector 90. Specifically, the intended detection section along the capillary tube 10 is positioned at the focal point 92 of the paraboloid reflector 90. Two mounting nuts 94 and 95 hold the capillary tube 10 in place. In this embodiment, there are two laser sources 96 and 97 having their beams 98 and 99 filtered by filters 100 and 101 and focused by lenses 102 and 103 onto the capillary tube 10 at the focal point 92 of the paraboloid reflector 90. Holes 106 and 107 are provided in the body 91 of the reflector 90 for passage of the laser beams 98 and 99. When the laser beams 98 and 99 are of the same wavelengths, the angle between the two laser beams 98 and 99 in a horizontal plane is not exactly 180° to avoid optical feedback. When the laser beams 98 and 99 are of different wavelengths, the beams may be exactly 180° apart in a horizontal plane (as in Fig. 7 and 8) without concern for feedback since the two exciting filters 100 and 101 would then not pass the same wavelengths.

Provision is made for UV absorption detection. Referring to Fig. 8, an axial hole 110 is provided in the base of the reflector body 91 to allow passage of UV beam 112 from a UV source 114, (e.g. deuterium lamp) to the focal point 92. The UV beam 112 is filtered by a filter 116 and focused by a lens 118 onto the detection section of the capillary tube. A conical shaped mask 120 projects out from the axial hole 110 and terminates at the capillary tube 10. A hole 122 having a diameter smaller than that of the capillary separation channel is drilled in this conical mask 120 at its apex and serves to define the portion of the UV beam 112 passing through to the capillary separation channel. Lens 124 focuses the beam transmitted through the capillary onto the detector 126 via mirror 128 and filter 130. This lens 124 is supported on a strip 132 of metal running across the mouth of the paraboloid reflector 90 perpendicular to the capillary tube 10. The strip blocks the intense laser rays scattered from the capillary tube 10. Filter 130 passes the same UV wavelengths as filter 116 and thereby eliminates rays scattered and fluoresced by the sample from being detected by the detector 126. It should be noted that the UV beam 112 is essentially non-coherent, hence must be defined by a much larger solid angle than the two laser beams 98 and 99.

The fluorescence of the sample is collected and collimated by the paraboloid reflector 90. In the configuration shown in Fig. 8, the light from the upper half of the reflector 90 passes through filter 134 and onto detector 136 while the light from the lower half of the reflector 90 passes through filter 135 and onto detector 137.

In the configuration of Fig. 8, it is intended that the three channels (laser beams 98 and 99 and UV beam 112) be detected simultaneously. Performance in this configuration will be limited by cross-talk in the three channels. It must be recognized that the fluorescence emission intensity in the fluorescence channels are much less than the UV intensity in the absorbance channel. Also, no UV radiation can pass through filters 134 and 135, but the UV radiation passing through filter 116 may excite fluorescence at wavelengths passed by filters 134 and 135. Fortunately, the intensity of the UV beam 112 is nowhere near as intense as the laser beams 98 and 99 and the quantum efficiency of fluorescence from the UV radiation can be expected to be much lower than that at the laser frequencies. Consequently, the fluorescence originating from UV excitation will be small relative to that originating from laser excitation. However, filter 130 may be of the absorption type and may exhibit a significant transmittance at the wavelengths of the intense laser sources.

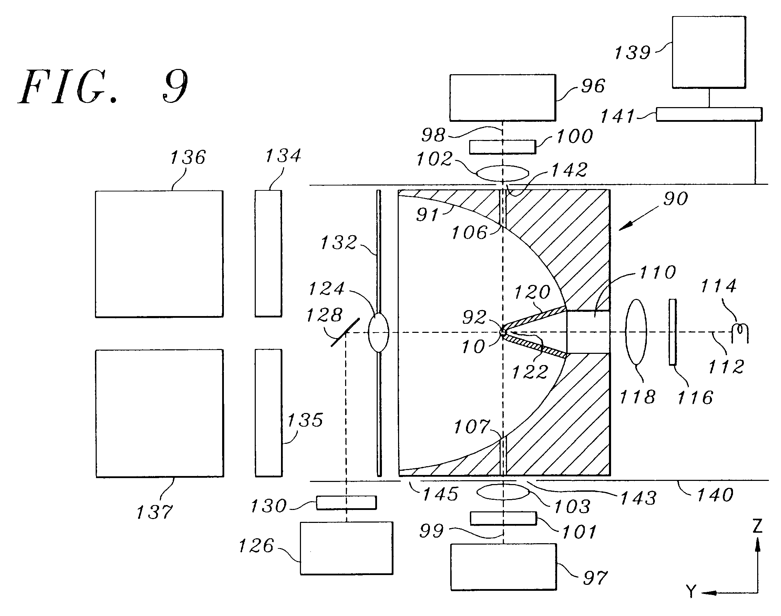

The problem of cross-talk can be overcome by temporal masking of the radiation sources and/or the detector 126. Fig. 9 shows such a configuration, wherein a cylinder 140 is translated along the axis of the paraboloid reflector 90 by means of a motor 139 and a conventional eccentric drive mechanism 141. Apertures 142 and 143 in this cylinder 140 permit passage of beams 98 and 99 from the two laser sources 96 and 97 to the sample at different times while allowing simultaneous UV detection. However, shown in Fig. 9, to prevent cross-talk between the laser sources 96 and 97 and the UV source 114, the cylindrical mask 140 extends to block the UV detector 126. During a portion of each translation of the cylindrical mask 140, both laser beams 98 and 99 are blocked while allowing the detector 126 to sense the UV beam 112 through aperture 145. During another period, the detector 126 is blocked by cylindrical mask 140 when the sample is alternately irradiated by the lasers. The sample, however, is still exposed to the UV beam 112 during the period of laser exposure. In a further modification, the positions of the detector 126 and the UV source 114 are reversed (not shown). In this way, the simple translating cylinder allows the sample to be exposed to the three sources at three different intervals of translation of the cylinder. The latter two configurations, however, do not allow simultaneous detection using both laser and UV sources.

More than three channels of detection can be envisioned. For example, either or both of the lasers may emit more than one frequency of intense coherent light. Furthermore, it may be noted that more than two lasers can simultaneously illuminate the capillary tube so long as these lasers are positioned in a plane normal to the axis of the capillary tube.

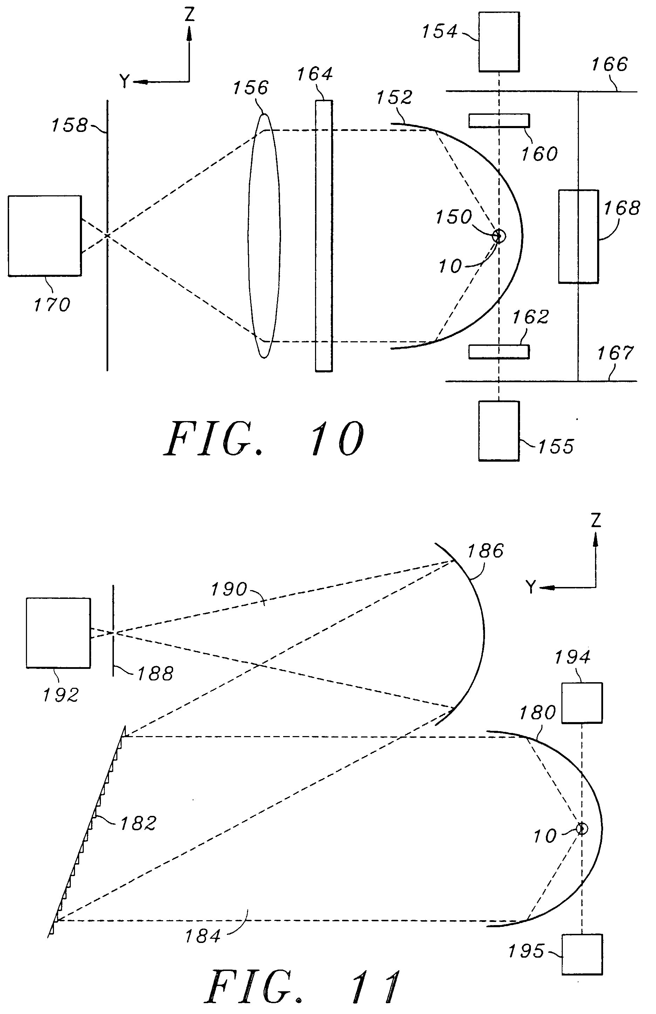

Fig. 10 shows another embodiment of multiple wavelength laser excitation. Fluorescence radiation originating from the sample in the capillary tube 10 at the focal point 150 as excited by laser sources 154 and 155 is focused by the paraboloid reflector 152, filtered by filter 164 and focused by lens 156 onto an aperture plate 158. Filters 160 and 162 allow only radiation of the desired wavelength to fall on the sample at the focal point 150. Partially rotating shutters 166 and 167 driven by a motor 168 alternately exposes the sample to radiation from the two sources 154 and 155. Filter 164 removes the exciting radiation so that a detector 170 located to the left of the aperture plate 158 responds only to fluorescence radiation. It should be obvious that filter 164 may also be a composite filter (e.g. a wheel having filters of various wavelength positioned about its axis) rotating synchronously with shutters 160 and 162. In this way the detected signal may be sorted for both excitation and fluorescent emission wavelengths. The advantages of using the aperture plate 158 has been previously discussed with reference to Fig. 5.

A further improvement of the above mentioned embodiments is shown in Fig. 11. A grating monochromator is positioned in the collimated beam 184 from the paraboloid reflector 180. A plane diffraction grating 182 intercepts the collimated beam 184 and radiation of a particular wavelength will diffract to mirror 186 from which it will be focused to an aperture on plate 188. After which the focused beam 190 may be detected using detector 192. Either by rotation of the grating 182 or translation of the aperture plate 188, a spectrum of radiation may be detected. As a refinement, a filter (not shown) may be placed in the collimated beam 184 to remove the intense laser excitation wavelengths. An array detector, i.e. diode array or charged-coupled device, may be substituted for the plate 188 and detector 192, thereby permitting the measurement of fluorescence spectrum without moving parts. The two excitation sources 194 and 195 may be shuttered by the mechanism shown in Fig. 10.

As a further modification of the system in Fig. 11, the aperture plate 188 may be tailored to allow a specific wavelength interval of fluorescence radiation to be detected. The system need not be limited to one wavelength interval. Two or more intervals may be sensed either with one or more detectors. The signals may be either spatially or temporally sorted. In some cases it may be possible to tailor one aperture (and detector) to respond to Raman signal (characteristic signal in capillary electrophoresis) and with proper attenuation allow compensation for this complicating factor.

While the invention has been described with respect to the illustrated embodiments in accordance therewith, it will be apparent to those skilled in the art that various modifications and improvements may be made without departing from the scope of the invention. Accordingly, it is to be understood that the invention is not to be limited by the specific illustrated embodiments, but only by the scope of the appended claims.

## Claims

1. An apparatus for collecting and detecting fluorescent emission of a sample comprising:
a separation column;
a fluorescence collector (40; 43; 87; 152; 180) having an axially symmetrical concave reflective surface defining a focal point (44; 150), the separation position being such that the sample migrates off the column past the focal point (44; 150);
irradiation means (26; 154; 155; 194; 195) for irradiating the sample as it migrates past the focal point (44; 150) so as to cause the sample to emit fluorescence, some of the fluorescence being reflected off the reflective surface of the collector; and
detection means (70; 75; 170; 192) for detecting radiation emanating from the sample including the reflected fluorescence,
**characterized** in
that the separation column is a capillary electrophoresis separation channel and the fluorescence collector (40; 43; 87; 152; 180) is positioned such that the sample within the electrophoresis separation channel migrates past the focal point (44; 150) .

2. An apparatus as in claim 1,
wherein the fluorescence collector comprises a body (41) defining an axially symmetrical concave paraboloid reflective surface (42), whereby the fluorescence reflected off the reflective surface (42) is collimated.

3. An apparatus as in claim 2,
wherein the body (41) has holes (50, 51) through which the capillary tube (10) is threaded and intersects the focal point (44) of the reflective surface (42), and holes (54, 62; 110) through which the radiation from the irradiating means (26) passes.

4. An apparatus as in any of claims 1 to 3,
wherein the irradiation means (26; 154, 155; 194, 195) comprises a laser.

5. An apparatus as in claim 4,
wherein irradiation of the laser (26) causes light to scatter from the capillary tube (10), and wherein the apparatus further comprises a blocking strip (66; 84) across the concave collector (40; 87) for blocking the scattered light from being detected by the detection means (70; 75).

6. An apparatus as in any of claims 1 to 5,
further comprising a filter (68; 89; 164) which blocks radiation of undesired wavelength in the collimated fluorescence.

7. An apparatus as in any of claims 1 to 6,
further comprising focusing means (72; 156; 186) for focusing the collimated fluorescence to the detection means (75; 170; 192).

8. An apparatus as in any of claims 1 to 7,
further comprising a plate (74; 158; 188) having an aperture (76) defined thereon for restricting the radiation detectable by the detection means (75; 170; 192), thereby blocking stray radiation.

9. An apparatus as in claim 7 or 8,
further comprising means (182) for separating collimated fluorescent radiation into a number of different wavelengths and directing a particular wavelength of radiation toward the focusing means (186).

10. An apparatus as in any of claims 1 to 9,
wherein the irradiation means comprises means (154, 155; 194, 195) for generating first and second laser beams which are directed at the sample at the focal point (92; 150) of the collector (90; 152).

11. An apparatus as in claim 10,
further comprising means (166, 167, 168) for alternately directing the first and second laser beams at the sample.

12. An apparatus as in claim 10 or 11,
wherein the first and second laser beams are of different wavelengths or at the same wavelength.

13. Apparatus as in claim 1,
**characterized** in
that it further comprises:
second irradiation means (114) for irradiating the sample as it migrates past the focal point (92), whereby the sample absorbs some of the radiation from said second irradiation means (114); and
second detection means (126) for detecting the amount of radiation absorbed by the sample.

14. An apparatus as in claim 2 or 13,
wherein detections by the first and second detection means (136, 137; 126) are performed simultaneously.

15. An apparatus as in claim 2 or 13,
further comprising means (139, 140, 141) for effecting detection of fluorescence and absorbance alternately by the first and second detection means (136, 137; 126).

16. An apparatus as in any of claims 13 to 15,
wherein the first irradiation means (96; 97) comprises a laser and the second irradiation means (114) comprises an ultraviolet source.

17. Apparatus as in claim 1 designed for capillary electrophoresis,
**characterized** in
that it further comprises:
means (18, 20, 22, 23, 24) for causing electrophoresis of the sample into its components; and
optionally further irradiation means (26, 96, 97) and detection means (70, 136, 137).

## Patentansprüche

1. Vorrichtung zum Sammeln und Nachweisen der Fluoreszenzemission einer Probe, umfassend:
eine Trennsäule;
einen Fluoreszenzkollektor (40; 43; 87; 152; 180) mit einer axialsymmetrischen, konkaven Reflexionsoberfläche, die einen Brennpunkt (44; 150) definiert, wobei die Trennposition so ist, daß die Probe aus der Säule nach dem Brennpunkt (44; 150) migriert;
eine Bestrahlungsvorrichtung (26; 154; 155; 194; 195) zur Bestrahlung der Probe, wenn sie nach dem Brennpunkt (44; 150) migriert, um die Probe zur Emission von Fluoreszenz zu bringen, wobei etwas der Fluoreszenz von der Reflektionsoberfläche des Kollektors reflektiert wird; und
eine Nachweisvorrichtung (70; 75; 170; 192) zum Nachweisen von Strahlung, die von der Probe ausgeht, einschließlich der reflektierten Fluoreszenz,
**dadurch gekennzeichnet**,
daß die Trennsäule ein Kapillarelektrophorese-Trennkanal ist und der Fluoreszenzkollektor (40; 43; 87; 152; 180) so positioniert ist, daß die Probe innerhalb des Elektrophorese-Trennkanals nach dem Brennpunkt (44; 150) migriert.

2. Vorrichtung nach Anspruch 1,
wobei der Fluoreszenzkollektor einen Körper (41) umfaßt, der eine axialsymmetrische, konkave, paraboloide Reflektionsoberfläche (42) definiert, wobei die von der Reflektionsoberfläche (42) reflektierte Fluoreszenz kollimiert wird.

3. Vorrichtung nach Anspruch 2,
wobei der Körper (41) Löcher (50, 51) aufweist, durch die die Kapillarröhre (10) eingefädelt ist und den Brennpunkt (44) der Reflektionsoberfläche (42) kreuzt, und Löcher (54, 62; 110) aufweist, durch die die Strahlung von der Bestrahlungsvorrichtung passiert.

4. Vorrichtung nach einem der Ansprüche 1 bis 3,
wobei die Bestrahlungsvorrichtung (26; 154, 155; 194, 195) einen Laser umfaßt.

5. Vorrichtung nach Anspruch 4,
wobei die Bestrahlung des Lasers (26) Licht dazu bringt, von der Kapillarröhre (10) zu streuen, und wobei die Vorrichtung weiterhin einen Blockierungsstreifen (66; 84) über den konkaven Kollektor (40; 87) zum Blockieren des gestreuten Lichts vom Nachweis durch die Nachweisvorrichtung (70; 75) umfaßt.

6. Vorrichtung nach einem der Ansprüche 1 bis 5,
die weiterhin einen Filter (68; 89; 164) umfaßt, der Strahlung von unerwünschter Wellenlänge in der kollimierten Fluoreszenz blockiert.

7. Vorrichtung nach einem der Ansprüche 1 bis 6,
die weiterhin eine Fokussierungsvorrichtung (72; 156; 186) zum Fokussieren der kollimierten Fluoreszenz zur Nachweisvorrichtung (75; 170; 192) umfaßt.

8. Vorrichtung nach einem der Ansprüche 1 bis 7,
die weiterhin eine Platte (74; 158; 188) umfaßt, die eine darauf definierte Öffnung (76) zur Einschränkung der Strahlung aufweist, die durch die Nachweisvorrichtung (75; 170; 192) nachweisbar ist, wodurch Streustrahlung blockiert wird.

9. Vorrichtung nach Anspruch 7 oder 8,
die weiterhin eine Vorrichtung (182) zum Trennen kollimierter Fluoreszenzstrahlung in eine Anzahl von verschiedenen Wellenlängen und Leiten einer bestimmten Wellenlänge von Strahlung zur Fokussierungsvorrichtung (186) umfaßt.

10. Vorrichtung nach einem der Ansprüche 1 bis 9,
wobei die Strahlungsvorrichtung eine Vorrichtung (154, 155; 194, 195) zur Erzeugung von ersten und zweiten Laserstrahlen umfaßt, die zur Probe beim Brennpunkt (92; 150) des Kollektors (90; 152) geleitet werden.

11. Vorrichtung nach Anspruch 10,
die weiterhin eine Vorrichtung (166, 167, 168) zum abwechselnden Leiten des ersten und zweiten Laserstrahls zur Probe umfaßt.

12. Vorrichtung nach Anspruch 10 oder 11,
wobei der erste und zweite Laserstrahl von verschiedener Wellenlänge oder gleicher Wellenlänge sind.

13. Vorrichtung nach Anspruch 1,
**dadurch gekennzeichnet**,
daß sie weiterhin umfaßt:
eine zweite Bestrahlungsvorrichtung (114) zur Bestrahlung der Probe, wenn sie nach dem Brennpunkt (92) migriert, wobei die Probe etwas der Strahlung von der zweiten Bestrahlungsvorichtung (114) absorbiert; und
eine zweite Nachweisvorrichtung (126) zum Nachweisen der Menge der Strahlung, die durch die Probe absorbiert ist.

14. Vorrichtung nach Anspruch 2 oder 13,
wobei Nachweise durch die erste und zweite Nachweisvorrichtung (136, 137; 126) gleichzeitig durchgeführt werden.

15. Vorrichtung nach Anspruch 2 oder 13,
die weiterhin eine Vorrichtung (139, 140, 141) umfaßt, mit der der Nachweis der Fluoreszenz und Absorption abwechselnd durch die erste und zweite Nachweisvorrichtung (136, 137; 126) bewirkt wird.

16. Vorrichtung nach einem der Ansprüche 13 bis 15,
wobei die erste Bestrahlungsvorrichtung (96; 97) einen Laser und die zweite Bestrahlungsvorrichtung (114) eine Ultraviolettquelle umfaßt.

17. Vorrichtung nach Anspruch 1, die für die Kapillarelektrophorese ausgelegt ist,
**dadurch gekennzeichnet**,
daß sie weiterhin umfaßt:
eine Vorrichtung (18, 20, 22, 23, 24), die die Elektrophorese der Probe in ihre Komponenten bewirkt; und
gegebenenfalls eine weitere Bestrahlungsvorrichtung (26, 96, 97) und Nachweisvorrichtung (70, 136, 137).

## Revendications

1. Appareil destiné à collecter et détecter une émission de fluorescence d'un échantillon, comprenant :
une colonne de séparation,
un collecteur de fluorescence (40 ; 43 ; 87 ; 152 ; 180) ayant une surface réfléchissante concave axialement symétrique délimitant un point focal (44 ; 150), la position de séparation étant telle que l'échantillon s'écarte par migration de la colonne au-delà du point focal (44 ; 150),
un dispositif d'irradiation (26 ; 154 ; 155 ; 194 ; 195) destiné à irradier l'échantillon lorsqu'il migre le long du point focal (44 ; 150) en provoquant l'émission de fluorescence par l'échantillon, une partie de la fluorescence étant alors réfléchie sur la surface réfléchissante du collecteur, et
un dispositif (70 ; 75 ; 170 ; 192) de détection du rayonnement émanant de l'échantillon et comprenant la fluorescence réfléchie,
caractérisé en ce que la colonne de séparation est un canal capillaire de séparation par électrophorèse, et le collecteur de fluorescence (40 ; 43 ; 87 ; 152 ; 180) est disposé de manière que l'échantillon contenu dans le canal de séparation par électrophorèse migre devant le point focal (44 ; 150).

2. Appareil selon la revendication 1, dans lequel le collecteur de fluorescence est un corps (41) qui délimite une surface réfléchissante concave (42) en forme de paraboloïde axialement symétrique, si bien que la lumière de fluorescence réfléchie par la surface réfléchissante (42) est collimatée.

3. Appareil selon la revendication 2, dans lequel le corps (41) a des trous (50, 51) dans lesquels le tube capillaire (10) est vissé et recoupe le point focal (44) de la surface réfléchissante (42), et des trous (54, 62 ; 110) par lesquels passe le rayonnement provenant du dispositif d'irradiation (26).

4. Appareil selon l'une quelconque des revendications 1 à 3, dans lequel le dispositif d'irradiation (26 ; 154, 155 ; 194, 195) est un laser.

5. Appareil selon la revendication 4, dans lequel l'irradiation du laser (26) provoque la diffusion de lumière à partir du tube capillaire (10), et l'appareil comporte en outre une bande d'arrêt (66 ; 84) placée transversalement au collecteur concave (40 ; 87) et destinée à arrêter la lumière diffusée afin qu'elle ne soit pas détectée par le dispositif de détection (70 ; 75).

6. Appareil selon l'une quelconque des revendications 1 à 5, comprenant en outre un filtre (68 ; 89 ; 164) qui arrête le rayonnement à une longueur indésirable dans la lumière collimatée de fluorescence.

7. Appareil selon l'une quelconque des revendications 1 à 6, comprenant en outre un dispositif (72 ; 156 ; 186) de focalisation de la lumière collimatée de fluorescence sur le dispositif de détection (75 ; 170 ; 192).

8. Appareil selon l'une quelconque des revendications 1 à 7, comprenant en outre une plaque (74 ; 158 ; 188) ayant un orifice (76) délimité afin qu'il limite le rayonnement qui peut être détecté par le dispositif (75 ; 170 ; 192) de détection et arrête ainsi le rayonnement parasite.

9. Appareil selon la revendication 7 ou 8, comprenant en outre un dispositif (182) destiné à séparer le rayonnement collimaté de fluorescence en un certain nombre de longueurs d'onde différentes et à diriger une longueur d'onde particulière du rayonnement vers le dispositif de focalisation (186).

10. Appareil selon l'une quelconque des revendications 1 à 9, dans lequel le dispositif d'irradiation comporte un dispositif (154, 155 ; 194 ; 195) destiné à créer un premier et un second faisceau laser qui sont dirigés sur l'échantillon au point focal (92 ; 150) du collecteur (90 ; 152).

11. Appareil selon la revendication 10, comprenant en outre un dispositif (166, 167, 168) destiné à diriger en alternance le premier et le second faisceau laser sur l'échantillon.

12. Appareil selon la revendication 10 ou 11, dans lequel le premier et le second faisceau laser ont des longueurs d'onde différentes ou se trouvent à la même longueur d'onde.

13. Appareil selon la revendication 1, caractérisé en ce qu'il comporte en outre :
un second dispositif d'irradiation (114) destiné à irradier l'échantillon lorsqu'il migre devant le point focal (92), si bien que l'échantillon absorbe une partie du rayonnement provenant du second dispositif d'irradiation (114), et
un second dispositif (126) de détection de l'amplitude du rayonnement absorbé par l'échantillon.

14. Appareil selon la revendication 2 ou 13, dans lequel les détections par les premier et second dispositifs de détection (136, 137 ; 126) sont effectuées simultanément.

15. Appareil selon la revendication 2 ou 13, comprenant en outre un dispositif (139, 140, 141) de détection de la fluorescence et du coefficient d'absorption en alternance par les premier et second dispositifs de détection (136, 137 ; 126).

16. Appareil selon la revendication 13 ou 15, dans lequel le premier dispositif d'irradiation (96 ; 97) est un laser et le second dispositif d'irradiation (114) est une source ultraviolette.

17. Appareil selon la revendication 1, destiné à une électrophorèse dans un capillaire, caractérisé en ce qu'il comporte en outre :
un dispositif (18, 20, 22, 23, 24) destiné à provoquer une électrophorèse de l'échantillon afin qu'il se sépare en ses éléments constituants, et
un dispositif supplémentaire d'irradiation (26, 96, 97) et un dispositif supplémentaire de détection, (70, 136, 137) éventuellement.
